# EUROPEAN PATENT SPECIFICATION

(11) **EP 2 716 994 B1**
(45) Date of publication and mention of the grant of the patent: **07.08.2019**
(21) Application number: 11866642.9
(22) Date of filing: 03.06.2011
(51) Int. Cl.: F24S 80/50, F24S 80/00, F24S 25/60, F24S 10/75, F24S 80/453, F24S 80/457

(54) **SOLAR HEAT COLLECTOR**
SONNENWÄRMEKOLLEKTOR
COLLECTEUR DE CHALEUR SOLAIRE

(43) Date of publication of application: 09.04.2014
(73) Proprietor: Fundación Cidaut, 47151 Valladolid (ES)
(72) Inventor: ALONSO SASTRE, Carlos, E-47151 Valladolid (ES); ZAMARRÓN PINILLA, Alberto, E-47151 Valladolid (ES); MERINO SENOVILLA, Juan Carlos, E-47151 Valladolid (ES)
(74) Representative: Capitán García, Maria Nuria
(86) International application number: PCT/ES2011/070398
(87) International publication number: WO 2012/164111

(56) References cited:
- EP-A2- 2 244 031
- WO-A1-2008/009755
- WO-A1-2008/009755
- WO-A2-2009/158717
- DATABASE WPI 01 October 2010 Derwent Publications Ltd., London, GB; AN 2010-N84494, XP055147591 & AU 2010 100 962 A4 (ROBERT CARPENTER) 07 October 2010
- DATABASE WPI 01 September 1999 Derwent Publications Ltd., London, GB; AN 1999-528695, XP055147593 & DE 198 10 208 A1 (SCHWARZ HORST) 16 September 1999
- DATABASE WPI 04 March 2010 Derwent Publications Ltd., London, GB; AN 2010-C32574, XP055147596 & DE 10 2008 045510 A1 (SAPA GMBH) 04 March 2010

## Description

### TECHNICAL FIELD OF THE INVENTION

The present invention belongs to the field of harnessing solar heat, such as solar heat collectors, and specifically their component parts.

The invention relates to a solar heat collector comprising a pipe in which flows an energetic fluid, and a structure formed by a frame of plastic material with metal profiles encapsulated during injection thereof, and which enables the inclusion of different functions such as thermal insulation, mechanical resistance, a light weight, and integration, thereby defining a robust and lightweight collector that has few components and is dimensionally stable.

### BACKGROUND OF THE INVENTION

Solar heat collectors are known comprising a pipe in which flows an energetic fluid and which have a structure that includes a plastic material.

Examples of such collectors can be found in patents DE2713628 with foam and locally positioned reinforcement fibers, CN101070999 and US4098265 with foam, WO2011009754 with foam in which the collector pipe and the insulator are embedded.

The state of the art therefore includes structures made of foam plastic, mainly some type of polyurethane, normally inside a metal box or the like.

These examples involve the use of several elements just to form the structure, to which other elements must be added in order to form the remaining components of the collector such as evacuation orifices, flanges for the pipes, attachments for the transparent cover, etc. All of this results in collectors with many components that are consequently relatively expensive, difficult to manufacture and heavy.

Moreover, in this field of the art dimensional control of the various components has great importance due to the wide range of working temperatures of collectors. The greater the number of components the longer the string of dimensions that must be combined, and therefore the greater the number of problems caused by component expansion.

WO 2008/009755 discloses a solar collector with a pipe through which flows an energetic fluid, an absorbent plate in contact with the pipe, an insulation arranged in parallel to the absorber plate and located on the side of the pipe opposite to the plate, a housing in the shape of a parallelepiped made of plastic material and formed by injection molding covered by a transparent cover, the frame of the housing is reinforced by metallic profiles inserted in the housing in the course of the injection process.

To solve the drawbacks of the state of the art, the solar collector described below is proposed which comprises a pipe in which flows an energetic fluid, and a structure made of a frame of plastic material with metallic profiles encapsulated therein during injection, allowing to include orifices and obtain a robust, lightweight collector that has few components and is dimensionally stable.

### DESCRIPTION OF THE INVENTION

The present invention is defined and characterized by the independent claim, while the dependent claims describe additional features thereof.

In view of the above, the present invention relates to a solar heat collector that comprises a pipe in which flows an energetic fluid, an absorbent plate in contact with said pipe, an insulation arranged in parallel to said absorbent plate and located on the side of the pipe opposite to said plate such that it exerts a constant force on it, a structure made of a plastic material with a parallelepiped shape which houses the aforementioned components of the collector, and a transparent cover placed on one of the greater faces of said structure on the side of the absorbent plate, wherein the structure consists of a frame formed by the four lateral faces of the parallelepiped that leaves the greater faces of the same open and is formed by injection of plastic material; said frame is reinforced by metallic profiles encapsulated in the aforementioned injection process, such that said profiles have a shorter length than the corresponding plastic sides of the frame, thereby leaving the corners of the frame with only plastic material and allowing the establishment therein of orifices formed in the frame injection process.

An advantage of said collector is the thermal insulation due to the encapsulation of metallic profiles, which as it is complete, avoids thermal bridges while ensuring the water-tightness of the frame, compared to structures in which the profiles are not encapsulated or are only partially encapsulated.

A further advantage is the robustness also provided by the encapsulation of metallic profiles in a closed plastic frame, which forms a structure with great resistance to the mechanical loads required of solar heat collectors.

A further advantage of said collector is its light weight, both absolute and specific for the aforementioned robustness, which makes it substantially superior to collectors in which different components of the structure and attachments are mounted separately.

Yet another advantage of said collector is its low number of components, resulting from the integration provided by the plastic injection process, which greatly reduces the number of components compared to collectors in which the components are assembled.

Finally, another advantage of said collector is its dimensional stability, which is of great importance in this field of the art so that energy efficiency is maintained throughout the working temperature range, achieved by the aforementioned structure of a metallic profile encapsulated in plastic and having few components joined by integration thereof, which minimizes the serial concatenation of expansions and contractions, resulting in greater dimensional stability with respect to known collectors.

### BRIEF DESCRIPTION OF THE FIGURES

The present specification is completed by a set of drawings that illustrate a preferred embodiment and in no way limit the scope of the invention.

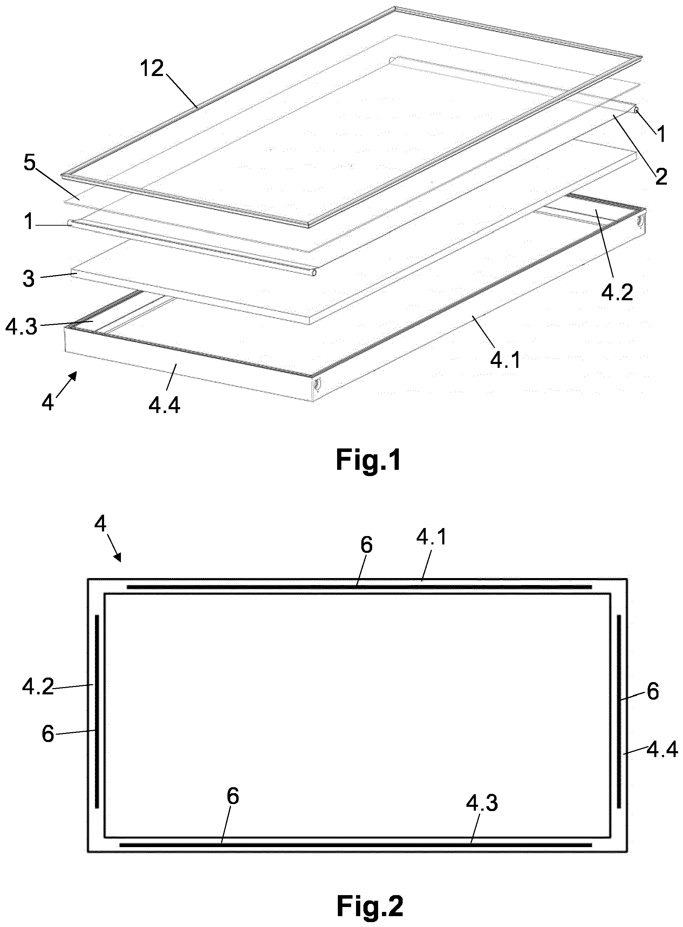

Figure 1 shows an exploded perspective view of components of the collector.
Figure 2 shows a plan view of the frame, indicating the reinforcement profiles.

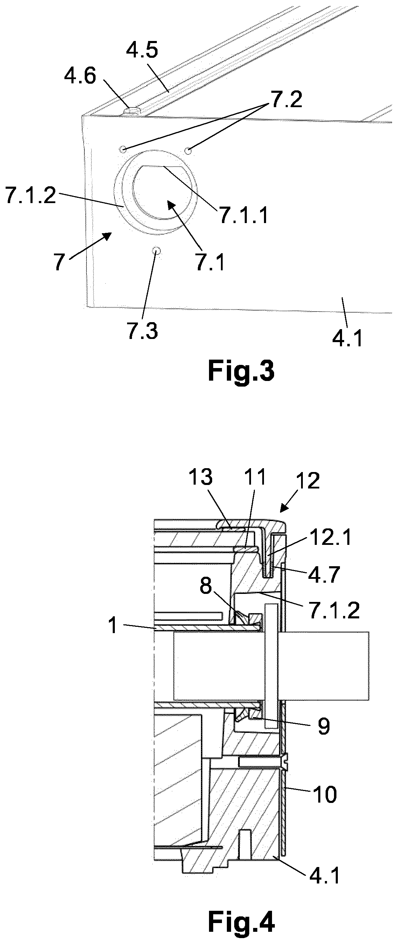

Figure 3 shows an enlarged perspective view of one of the corners of the frame, showing the pipes.
Figure 4 shows a cross section of a profile view of a detail of one of the corners of the frame showing the pipes.

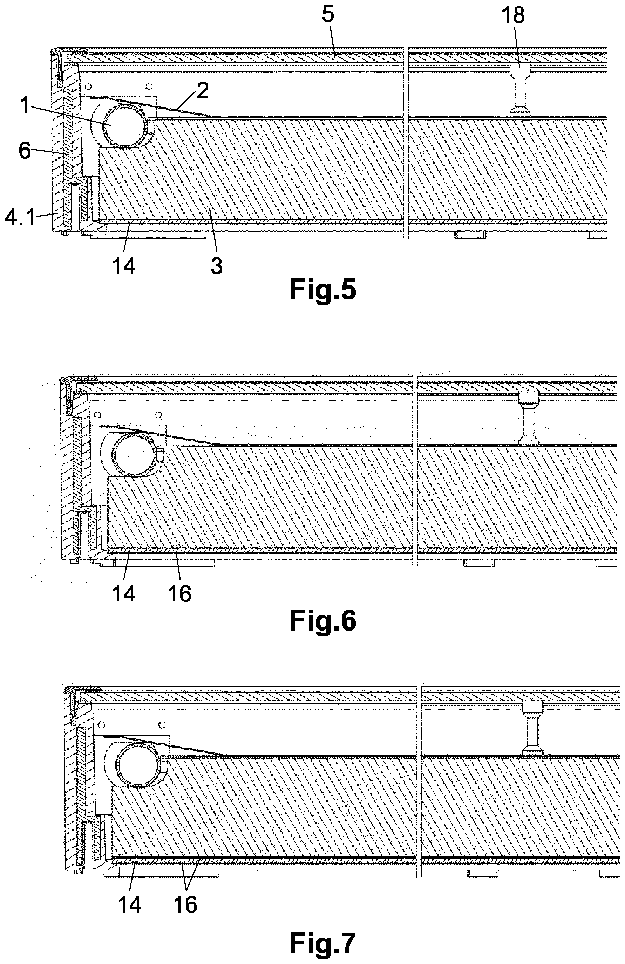

Figure 5 shows a cross section of a profile view of a detail of the collector with a rear closing plate.
Figure 6 shows a cross section of a profile view of a detail of the collector with a rear closing plate that includes a sheet on its lower greater face.
Figure 7 shows a cross section of a profile view of a detail of the collector with a rear closing plate that includes a sheet in each of the greater faces.

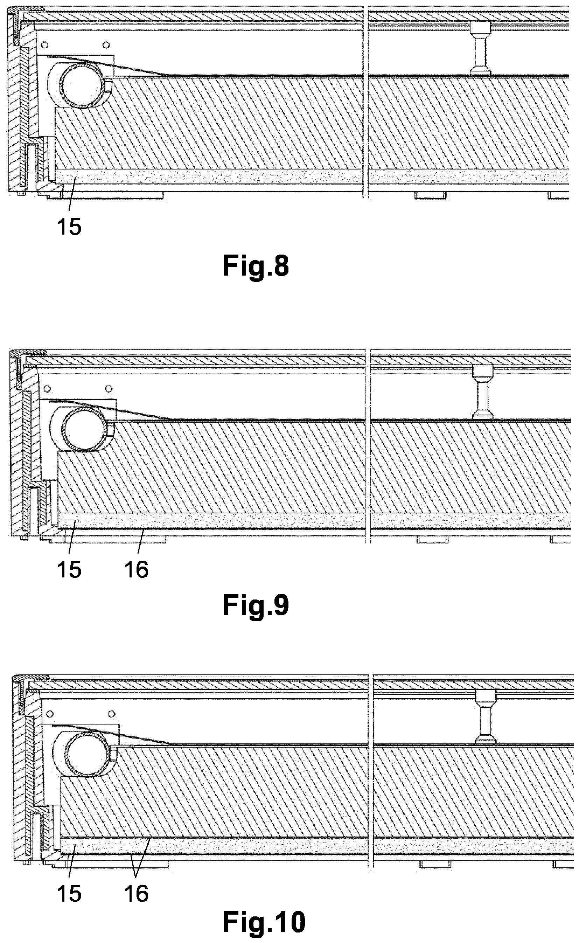

Figure 8 shows a cross section of a profile view of a detail of the collector with a rear closing plate of a foam plastic material.
Figure 9 shows a cross section of a profile view of a detail of the collector with a rear closing plate of a foam plastic material that includes a sheet in its lower greater face.
Figure 10 shows a cross section of a profile view of a detail of the collector with a rear closing plate of a foam plastic material that includes a sheet on each of the greater faces.

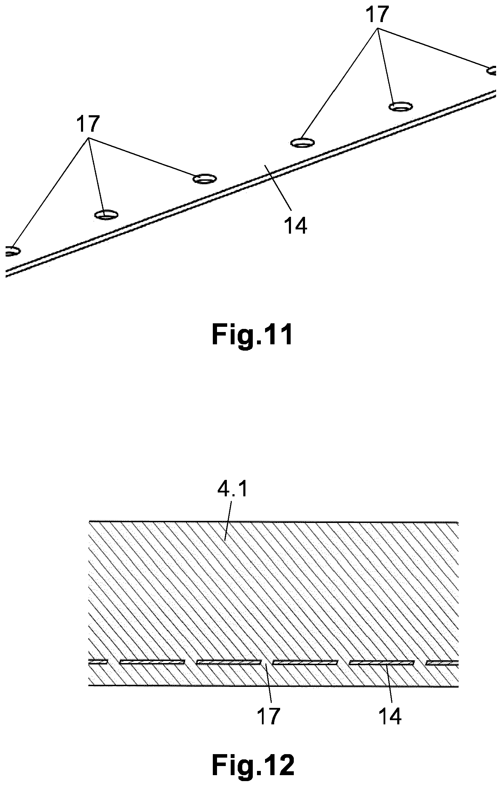

Figure 11 shows an enlarged perspective view of orifices in the area near the edges of a rear closing plate.
Figure 12 shows a cross section of the orifices of figure 11 with the rear closing plate encapsulated in the frame.

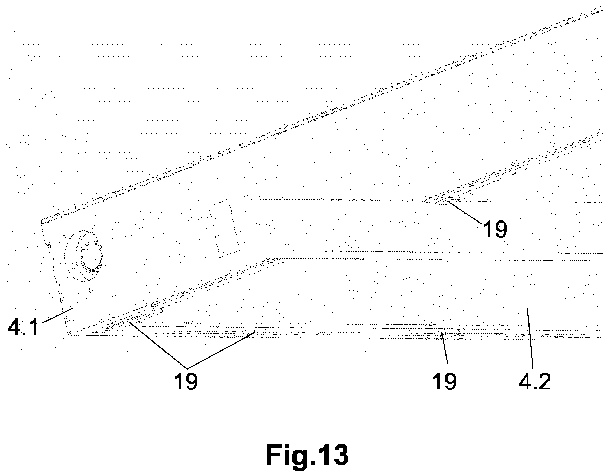

Figure 13 shows an enlarged perspective view of one of the support legs of the frame.

### DETAILED DESCRIPTION OF A PREFERRED EMBODIMENT

The present invention relates to a solar heat collector provided with a pipe(1) inside which flows an energetic fluid. For illustration purposes, a pipe (1) is cited that extends in the collector and is the common situation; however, several pipes (1) can be included that join at the same inlet and outlet as in the case where there is only one pipe (1) or at several inlets and outlets.

The collector comprises an absorbent plate (2) in contact with said pipe (1), normally made of copper or aluminum, with a treatment on its exposed face that enhances solar radiation absorption and reduces emission. This treatment can range from black paint to selective treatments using physical vapor deposition (PVD).

It also comprises an insulation (3) to prevent heat loss arranged in parallel to said absorbent plate (2) and on the side of the pipe (1) opposite to said plate (2), so that it exerts a constant force on said pipe (1).

The structure (4) of the collector is made of a plastic material, such as polyurethane (PU),with a parallelepiped shape which houses the aforementioned elements of the collector, and a transparent cover (5) made of tempered glass, for example, arranged on one of the greater faces of said structure (4) on the side of the absorbent plate (2). In this way, the structure (4) is insulating due to the inherent features of the plastic material and it is not necessary to add further insulation at the location of the plastic structure.

The structure is a frame (4) formed by the four side faces (4.1,4.2,4.3,4.4) of the parallelepiped leaving the greater faces open, formed by injection of plastic material such as by RIM (Reaction Injection Molding), said frame (4) being reinforced by metallic profiles (6) encapsulated in said injection process, so that said profiles (6) have a shorter length than the corresponding plastic sides of the frame(4.1,4.2,4.3,4.4), leaving the corners of the frame with only plastic material and thereby allowing the establishment therein of orifices (7) formed during the injection process of the frame (4).

Optionally and more typically the parallelepiped of the structure (4) is a right parallelepiped, such that the side faces(4.1,4.2,4.3,4.4) of the frame form a right angle to the greater faces.

The profiles (6) have different shapes such that their cross section approximately replicates the shape of the plastic that encapsulates them, in order to compensate the tensions of the plastic during the injection and subsequent stabilization in time. The shape of the metallic profiles (6) is meant to provide structural reinforcement or, in other words, minimize the moment of inertia in the axis perpendicular to the greater surface of the collector.

Thus, the profiles (6) have a rectilinear cross section, such as a constant inverted-Y cross section as shown in the figures, although they could be curved or have any other shape provided the aforementioned requirements are fulfilled.

Said metallic profiles (6) are preferably made of aluminum or galvanized steel, according to tests conducted on them.

The orifices (7) formed during the injection process of the frame (4) are of several types, one of which types is orifices (7.1) for the pipe, which have a greater diameter than said pipe and a circumference that includes a straight segment(7.1.1) at its upper end on which the pipe (1) rests at all times due to the force exerted on it by the insulation (3).

The reason for this configuration is that the pipe (1) expands in a different manner than the structure (4), and that they work at different temperature ranges, so that to prevent loads on the structure (4) the pipe (1) is allowed to expand freely. In addition, an important factor for the efficiency of the collector is a constant distance between the transparent cover (5) and the pipe (1), which is achieved by preventing the deflection of the pipe (1) and the absorbent plate(3) by the aforementioned configuration, which guarantees flatness, as well as with spacers (18) of the cover (5) as stated further below.

In addition, these orifices for the pipe (7.1) comprise a recess (7.1.2) facing out of the collector that is used to house the corresponding sealing gasket(8) and bushing (9), located at the end of the pipe (1).

This configuration seals the collector to prevent entry of rainwater with the sealing gasket (8), which can be fitted to provide a complete seal interfering with the recess or to prevent entry of rainwater while leaving a small air pocket to prevent condensation. This anti-condensation function is regulated and completed by some orifices (7.2) that connect directly to the injection and provide communication between the inside and the outside.

These orifices formed during the frame injection process are attachment orifices (7.3) used to attach some plates (10) on the outside of the orifices for the pipe (7.1) which withstand the pressure exerted on the connections of the pipe (1).

To reinforce the collector assembly, the transparent cover (5) is sealed by an adhesive onto the structure (4), instead of the sealing gasket commonly used. This requires considering that the materials are different and that an elastomeric adhesive is required with a thickness that guarantees its performance in the entire working temperature range.

For this reason, the structure (4) includes walls (4.5) for housing the sealing cord (11) of the transparent cover (5) along the perimeter of said frame (4). Advantageously, the housing walls (4.5) of the sealing cord (11) include separators (4.6) for the transparent cover (5) in the form of protrusions that guarantee the separation between the cover (5) and the frame (4) in the entire range of working temperatures of the collector, providing the dimensional stability needed to optimize the energy efficiency of the collector.

A frame (12) that protects the edge of the transparent cover (5) is placed on said transparent cover (5), preferably made of aluminum, and it is joined to the structure (4)by the same adhesion sealing process used for the cover (5). For this purpose, the frame (4) includes some housing grooves (4.7) in which some tabs (12.1) of the cover edge protection frame (12) are inserted with adhesive, and a sealing cord (13) is applied between said frame (12) and the transparent cover (5).

This adhesion sealing of the transparent cover (5) that makes use of the cover edge protection frame (12) reinforces the collector assembly substantially, making it very robust.

One of the advantages of the injection, as discussed above, is that it allows the plastic to encapsulate other parts or elements by enveloping them. This is also used in the rear closing plate (14), which is attached to the frame (4) by encapsulation along the perimeter with the plastic material of the injection, closing the face of the frame (4) opposite to the transparent cover (5).

Said rear closing plate (14) is meant to support the pressure exerted by wind, acting as a sail that transmits the loads to the perimeter of the frame (4).

In one embodiment, the rear closing plate (14) is made of a plastic material, such as polystyrene (PS),with a smaller modulus of elasticity than the aluminum plate that is normally used. As an alternative or attachment reinforcement, said plate (14) is provided with orifices (17) in the area near its edges and along the same, so that the plastic material of the injection is inserted in said orifices (17) to establish attachments in the form of rivets that encapsulate the plate on the perimeter.

In another embodiment, the rear closing plate is made of a foam plastic material (15), preferably polyurethane or poly-isocyanurate.

Both embodiments of the rear closing plate (14, 15) can have their lower greater face or both of their greater face covered with sheets that do not absorb or emit in the infrared band, such that they do not absorb the infrared radiation emitted by the pipe and do not emit infrared to the outside, in this way reducing the losses of the collector.

Some spacers (18) for the cover (5) are placed between the absorbent plate (2) and the transparent cover (5) to guarantee a constant separation between the plate (2) and the cover (5) by opposing the force exerted by the insulation (3).

The frame(4) comprises on the face with the insulation (3), that opposite to the face of the cover (5), some support legs (19) in the form of extensions parallel to the side faces(4.1,4.2,4.3,4.4) of the frame (4).

These legs (19) serve three purposes:
- acting as guides in the assembly process, as the collectors slide laterally on the profiles of the structure on which they are assembled to be packaged in groups;
- when the collectors are mounted on a structure in the form of stands, that is with an inclination, the support legs (19) stop the collector from falling due to gravity, securing its attachment to the structure;
- the top area of the support legs (19) simplifies the task of stacking collectors, as it hold in place the collector stacked on another collector by pressing against the protective frame of the edge of the cover (12).

## Claims

1. Solar heat collector that comprises a pipe (1) in which flows an energetic fluid, an absorbent plate (2) in contact with said pipe (1), an insulation (3) arranged in parallel to said absorbent plate (2) and located on the side of the pipe (1) opposite to said absorbent plate (2) such that it exerts a constant force on the same, a structure (4) made of a plastic material with a parallelepiped shape which houses the aforementioned components of the collector, and a transparent cover (5) placed on one of the greater faces of said structure (4) on the side of the absorbent plate (2), **characterized in that** the structure(4) consists of a frame formed by the four side faces(4.1,4.2,4.3,4.4) of the parallelepiped that leaves the greater faces of the same open and is formed by injection of plastic material, and said frame (4) is reinforced by metallic profiles (6) encapsulated in the aforementioned injection process such that said metallic profiles (6) have a shorter length than the corresponding plastic side faces (4.1,4.2,4.3,4.4) of the frame, thereby leaving the corners of the frame with only plastic material and therein orifices (7) are included, formed in the injection process of the frame (4).

2. Solar heat collector according to claim 1 **characterized in that** the structure (4) is a right parallelepiped.

3. Solar heat collector according to claim 1 **characterized in that** the metallic profiles (6) have a cross section that matches the shape of the plastic side faces (4.1,4.2,4.3,4.4) which encapsulates them.

4. Solar heat collector according to claim 3 **characterized in that** the metallic profiles (6) have a constant inverted-Y shape.

5. Solar heat collector according to claim 1 **characterized in that** the orifices (7) formed during the injection process of the frame (4) include orifices (7.1) for the pipe (1) with a smaller diameter than the same and a circumference that includes a straight segment (7.1.1) at the top end, on which the pipe (1) is resting at all times due to the force exerted on the latter by the insulation (3).

6. Solar heat collector according to claim 5 **characterized in that** the orifices (7.1) for the pipe comprise a recess (7.1.2) open towards the outside of the collector that houses corresponding sealing gaskets (8) and bushing (9).

7. Solar heat collector according to claim 1 **characterized in that** the orifices (7) formed in the injection process of the frame (4) comprise anti-condensation orifices (7.2) connecting an inside and an outside of the collector.

8. Solar heat collector according to claims 5 or 6 **characterized in that** the orifices (7) formed in the injection process of the frame (4) comprise attachment orifices (7.3) for attaching some plates (10) on an outer side of the orifices (7.1) for the pipe that withstand the pressure exerted on by the connections of the pipe.

9. Solar heat collector according to claim 1 **characterized in that** the frame(4) includes walls (4.5) for housing a sealing cord (11) of the transparent cover (5) along a perimeter of said frame (4).

10. Solar heat collector according to claim 9 **characterized in that** the walls (4.5)for housing the sealing cord (11) include separators (4.6) for the transparent cover (5) in the form of protrusions, such that they guarantee the separation between the cover (5) and the frame (4) in the entire range of working temperatures of the collector.

11. Solar heat collector according to claim 1 **characterized in that** the frame (4) includes some grooves (4.7) for housing some tabs (12.1) of a frame (12) meant to protect an edge of the transparent cover, in which said tabs (12.1) are introduced with an adhesive, and a sealing cord (13) applied between said frame (12) and the transparent cover (5).

12. Solar heat collector according to claim 1 **characterized in that** on the face opposite to the transparent cover (5) is placed a rear closing plate (14) that is attached to the frame (4) by encapsulation along the perimeter of the same by the plastic material of the injection.

13. Solar heat collector according to claim 12 **characterized in that** the rear closing plate (14) is a plastic plate.

14. Solar heat collector according to claim 12 **characterized in that** the rear closing plate is made of a foam plastic material (15).

15. Solar heat collector according to claims 13 or 14 **characterized in that** the rear closing plate (14,15) is covered on its lower greater face with a sheet(16) that does not absorb or emit in the infrared band.

16. Solar heat collector according to claims 13 or 14 **characterized in that** the rear closing plate (14,15) has both of its greater faces covered by corresponding sheets (16) that do not absorb or emit in the infrared band.

17. Solar heat collector according to claim 12 **characterized in that** the rear closing plate has orifices (17) in an area near its edges and along the same, such that the plastic material of the injection is introduced in said orifices to form attachments in the form of rivets that establish a peripheral encapsulation of the plate.

18. Solar heat collector according to claim 1 **characterized in that** spacers (18) for the cover (5) are placed between the absorbent plate (2) and the transparent cover (5) that guarantee a constant separation between the plate (2) and the cover (5) by opposing the force exerted by the insulation (3).

19. Solar heat collector according to claim 1 **characterized in that** the frame (4) comprises in the face of the insulation (3) some support legs (19) in the form of extensions parallel to the side faces(4.1,4.2,4.3,4.4) of the frame (4).

## Patentansprüche

1. Sonnenkollektor mit einem Rohr (1), in dem ein Energieträgerfluid strömt, einer absorbierenden Platte (2), die mit dem Rohr (1) in Kontakt steht, und mit einer Isolation (3), die parallel zur absorbierenden Platte (2) an der Seite des Rohrs (1) gegenüber der absorbierenden Platte (2) derart angeordnet ist, dass sie auf diese eine konstante Kraft ausübt, mit einer Struktur (4) aus einem als Parallelepiped geformten Kunststoffteil, das die zuvor genannten Komponenten des Kollektors aufnimmt, und mit einer transparenten Abdeckung (5), die auf einer der größeren Flächen der Struktur (4) auf der Seite der absorbierenden Platte(2) angeordnet ist, **dadurch gekennzeichnet, dass** die Struktur (4) aus einem Rahmen besteht, derart von den vier Seitenflächen (4.1, 4.2, 4.3 und 4.4) des Parallelepipeds gebildet, dass dessen größere Flächen offen bleiben, und der durch Einspritzen von Kunststoffmaterial geformt ist, wobei der Rahmen (4) durch metallische Profile (6) verstärkt ist, die im zuvor genannten Einspritzvorgang so ummantelt werden, dass die metallischen Profile (6) kürzer sind als die entsprechenden Kunststoff-Seitenflächen (4,1, 4.2, 4.3 und 4.4) des Rahmens, wodurch an den Ecken des Rahmens nur Kunststoffmaterial mit den darin eingelassenen Öffnungen (7) verbleibt, die beim Einspritzvorgang des Rahmens (4) gebildet werden.

2. Sonnenkollektor nach Anspruch 1, **dadurch gekennzeichnet, dass** die Struktur (4) ein rechtwinkliges Parallelepiped ist.

3. Sonnenkollektor nach Anspruch 1, **dadurch gekennzeichnet, dass** die metallischen Profile (6) einen Querschnitt aufweisen, der der Form der sie ummantelnden Kunststoff-Seitenflächen (4,1, 4.2, 4.3 und 4.4) entspricht.

4. Sonnenkollektor nach Anspruch 3, **dadurch gekennzeichnet, dass** die metallischen Profile (6) eine konstante umgekehrte Y-Form aufweisen.

5. Sonnenkollektor nach Anspruch 1, **dadurch gekennzeichnet, dass** die beim Einspritzvorgang des Rahmens (4) gebildeten Öffnungen (7) Öffnungen (7.1) für das Rohr (1) aufweisen, deren Durchmesser kleiner ist als das Rohr, und mit einem Umfang, der einen geraden Abschnitt (7.1.1) am oberen Ende umfasst, auf dem das Rohr (1) aufgrund der auf dasselbe von der Isolation (3) ausgeübten Kraft stets aufliegt.

6. Sonnenkollektor nach Anspruch 5, **dadurch gekennzeichnet, dass** die Öffnungen (7.1) für das Rohr eine zur Außenseite des Kollektors hin offene Vertiefung (7.1.2) aufweisen, in der entsprechende Dichtungen (8) und eine Buchse (9) untergebracht sind.

7. Sonnenkollektor nach Anspruch 1, **dadurch gekennzeichnet, dass** die Öffnungen (7), die beim Einspritzvorgang des Rahmens (4) gebildet werden, Kondensationsschutz-Öffnungen (7.2) aufweisen, die eine Innenseite und eine Außenseite des Kollektors miteinander verbinden.

8. Sonnenkollektor nach Anspruch 5 oder 6, **dadurch gekennzeichnet, dass** die Öffnungen (7), die beim Einspritzvorgang des Rahmens (4) gebildet werden, Befestigungsöffnungen (7.3) zum Befestigen einiger Platten (10) an einer Außenseite der Öffnungen (7.1) des Rohrs aufweisen, wobei diese Platten dem von den Rohranschlüssen ausgeübten Druck standhalten.

9. Sonnenkollektor nach Anspruch 1, **dadurch gekennzeichnet, dass** der Rahmen (4) Wände (4.5) zum Aufnehmen einer Dichtschnur (11) der transparenten Abdeckung (5) entlang eines Umfangs des genannten Rahmens (4) aufweist.

10. Sonnenkollektor nach Anspruch 9, **dadurch gekennzeichnet, dass** die Wände (4.5) zum Aufnehmen der Dichtschnur (11) Separatoren (4.6) für die transparente Abdeckung (5) in Form von Vorsprüngen derart aufweisen, dass sie die Trennung zwischen der Abdeckung (5) und dem Rahmen (4) im gesamten Betriebstemperaturbereich des Kollektors gewährleisten.

11. Sonnenkollektor nach Anspruch 1, **dadurch gekennzeichnet, dass** der Rahmen (4) einige Nuten (4.7) zur Aufnahme einiger Laschen (12.1) eines Rahmens (12) aufweist, der einen Rand der transparenten Abdeckung schützen soll, wobei die Laschen (12.1) mit einem Klebstoff und einer Dichtschnur (13) zwischen dem Rahmen (12) und der transparenten Abdeckung (5) eingeführt werden.

12. Sonnenkollektor nach Anspruch 1, **dadurch gekennzeichnet, dass** an der gegenüber der transparenten Abdeckung (5) liegenden Seite eine hintere Verschlussplatte (14) am Rahmen (4) angebracht und durch Ummanteln mit dem Kunststoffmaterial der Einspritzung entlang des Rahmenumfangs befestigt ist.

13. Sonnenkollektor nach Anspruch 12, **dadurch gekennzeichnet, dass** die hintere Verschlussplatte (14) eine Kunststoffplatte ist.

14. Sonnenkollektor nach Anspruch 12, **dadurch gekennzeichnet, dass** die hintere Verschlussplatte aus einem Schaumkunststoffmaterial (15) besteht.

15. Sonnenkollektor nach Anspruch 13 oder 14, **dadurch gekennzeichnet, dass** die hintere Verschlussplatte (14, 15) an ihrer unteren größeren Fläche von einer Platte (16) bedeckt ist, die im Infrarotbereich nicht absorbiert oder emittiert.

16. Sonnenkollektor nach Anspruch 13 oder 14, **dadurch gekennzeichnet, dass** beide größere Seiten der hinteren Verschlussplatte (14, 15) von entsprechenden Platten(16) bedeckt sind, die im Infrarotbereich nicht absorbieren oder emittieren.

17. Sonnenkollektor nach Anspruch 12, **dadurch gekennzeichnet, dass** die hintere Verschlussplatte in einem Bereich nahe an ihren Kanten und entlang derselben Öffnungen (17) derart aufweist, dass das Kunststoffmaterial der Einspritzung in die Öffnungen eingebracht wird, um Befestigungen in Form von Nieten herzustellen, die eine periphere Ummantelung der Platte herstellen.

18. Sonnenkollektor nach Anspruch 1, **dadurch gekennzeichnet, dass** zwischen der absorbierenden Platte (2) und der transparenten Abdeckung (5) Abstandhalter (18) für die Abdeckung (5) angeordnet sind, die einen konstanten Abstand zwischen der Platte (2) und der Abdeckung (5) gewährleisten, indem sie der von der Isolation (3) ausgeübten Kraft entgegenwirken.

19. Sonnenkollektor nach Anspruch 1, **dadurch gekennzeichnet, dass** der Rahmen (4) an der Stirnseite der Isolation (3) einige Stützbeine (19) in Form von Verlängerungen aufweist, die parallel zu den Seitenflächen (4.1, 4.2, 4.3 und 4.4) des Rahmens (4) verlaufen.

## Revendications

1. Collecteur de chaleur solaire comprenant un tuyau (1) dans lequel circule un fluide énergétique, une plaque absorbante (2) en contact avec ledit tuyau (1), un isolant (3) disposé parallèlement à ladite plaque absorbante (2) et situé sur le côté du tuyau (1) opposé à ladite plaque absorbante (2) de manière à exercer une force constante sur celle-ci, une structure (4) en matière plastique de forme parallélépipédique logeant les composants susmentionnés du collecteur et un couvercle transparent (5) placé sur l'une des plus grandes faces de ladite structure (4) du côté de la plaque absorbante (2), **caractérisé en ce que** la structure (4) est constituée d'un cadre formé par les quatre faces latérales (4.1, 4.2, 4.3, 4.4) du parallélépipède qui laisse les plus grandes faces de celui-ci ouvert et est formé par injection de matière plastique et ledit cadre (4) est renforcé par des profilés métalliques (6) encapsulés dans le processus d'injection susmentionné, de sorte que lesdits profilés métalliques (6) aient une longueur plus courte que les faces latérales en plastique (4.1, 4.2, 4.3, 4.4) correspondantes du cadre, laissant ainsi les coins du cadre uniquement avec de la matière plastique et des orifices (7) sont inclus à l'intérieur, formés lors du processus d'injection du cadre (4).

2. Collecteur de chaleur solaire selon la revendication 1, **caractérisé en ce que** la structure (4) est un parallélépipède droit.

3. Collecteur de chaleur solaire selon la revendication 1, **caractérisé en ce que** les profilés métalliques (6) ont une section transversale qui correspond à la forme des faces latérales en plastique (4.1, 4.2, 4.3, 4.4) qui les encapsulent.

4. Collecteur de chaleur solaire selon la revendication 3, **caractérisé en ce que** les profilés métalliques (6) ont une forme en Y inversé constant.

5. Collecteur de chaleur solaire selon la revendication 1, **caractérisé en ce que** les orifices (7) formés pendant le processus d'injection du cadre (4) comprennent des orifices (7.1) pour le tuyau (1) de diamètre inférieur à celui-ci et une circonférence qui comprend un segment droit (7.1.1) à l'extrémité supérieure, sur laquelle le tuyau (1) repose à tout moment en raison de la force exercée sur ce dernier par l'isolant (3).

6. Collecteur de chaleur solaire selon la revendication 5, **caractérisé en ce que** les orifices (7.1) pour le tuyau comprennent un évidement (7.1.2) ouvert vers l'extérieur du collecteur, dans lequel sont logés les joints d'étanchéité (8) et la bague (9) correspondants.

7. Collecteur de chaleur solaire selon la revendication 1, **caractérisé en ce que** les orifices (7) formés lors du processus d'injection du cadre (4) comprennent des orifices anti-condensation (7.2) reliant un intérieur et un extérieur du collecteur.

8. Collecteur de chaleur solaire selon les revendications 5 ou 6, **caractérisé en ce que** les orifices (7) formés lors du processus d'injection du cadre (4) comprennent des orifices de fixation (7.3) permettant de fixer des plaques (10) sur un côté externe des orifices (7.1) pour le tuyau résistant à la pression exercée par les raccords du tuyau.

9. Collecteur de chaleur solaire selon la revendication 1, **caractérisé en ce que** le cadre (4) comprend des parois (4.5) pour loger un cordon d'étanchéité (11) du couvercle transparent (5) le long d'un périmètre dudit cadre (4).

10. Collecteur de chaleur solaire selon la revendication 9, **caractérisé en ce que** les parois (4.5) destinées à loger le cordon d'étanchéité (11) comprennent des séparateurs (4.6) pour le couvercle transparent (5) sous forme de saillies, de manière à garantir la séparation entre le couvercle (5) et le cadre (4) dans toute la plage de températures de travail du collecteur.

11. Collecteur de chaleur solaire selon la revendication 1, **caractérisé en ce que** le cadre (4) comporte des rainures (4.7) destinées à loger des pattes (12.1) d'un cadre (12) destiné à protéger un bord du couvercle transparent, dans lesquelles lesdites pattes (12.1) sont introduites avec un adhésif et un cordon d'étanchéité (13) appliqué entre ledit cadre (12) et le couvercle transparent (5).

12. Collecteur de chaleur solaire selon la revendication 1, **caractérisé en ce que** sur la face opposée au couvercle transparent (5) est placée une plaque de fermeture arrière (14) fixée au cadre (4) par encapsulation sur son périmètre par la matière plastique de l'injection.

13. Collecteur de chaleur solaire selon la revendication 12, **caractérisé en ce que** la plaque de fermeture arrière (14) est une plaque en matière plastique.

14. Collecteur de chaleur solaire selon la revendication 12, **caractérisé en ce que** la plaque de fermeture arrière est constituée d'un matériau en mousse plastique (15).

15. Collecteur de chaleur solaire selon les revendications 13 ou 14, **caractérisé en ce que** la plaque de fermeture arrière (14, 15) est recouverte sur sa plus grande face inférieure d'une feuille (16) qui n'absorbe ni n'émet dans la bande infrarouge.

16. Collecteur de chaleur solaire selon les revendications 13 ou 14, **caractérisé en ce que** la plaque de fermeture arrière (14, 15) a ses deux plus grandes faces recouvertes par des feuilles correspondantes (16) qui n'absorbent ni n'émettent dans la bande infrarouge.

17. Collecteur de chaleur solaire selon la revendication 12, **caractérisé en ce que** la plaque de fermeture arrière présente des orifices (17) dans une zone proche de ses bords et le long de celle-ci, de sorte que la matière plastique de l'injection soit introduite dans lesdits orifices pour former des attaches sous forme de rivets qui établissent une encapsulation périphérique de la plaque.

18. Collecteur de chaleur solaire selon la revendication 1, **caractérisé en ce que** des éléments d'espacement (18) pour le couvercle (5) sont placés entre la plaque absorbante (2) et le couvercle transparent (5) garantissant une séparation constante entre la plaque (2) et le couvercle (5) en s'opposant à la force exercée par l'isolant (3).

19. Collecteur de chaleur solaire selon la revendication 1, **caractérisé en ce que** le cadre (4) comprend dans la face de l'isolant (3) des pieds de support (19) en forme de prolongements parallèles aux faces latérales (4.1, 4.2, 4.3, 4.4) du cadre (4).
